# EUROPÄISCHE PATENTSCHRIFT

(11) **EP 2 217 488 B1**
(45) Veröffentlichungstag und Bekanntmachung des Hinweises auf die Patenterteilung: **04.04.2012**
(21) Anmeldenummer: 08804184.3
(22) Anmeldetag: 15.09.2008
(51) Int. Cl.: B63H 21/30, F16F 3/087

(54) **LAGERANORDNUNG FÜR EINEN MOTOR ODER EIN AGGREGAT, INSBESONDERE FÜR DEN MARITIMEN BEREICH**
BEARING ARRANGEMENT FOR A MOTOR OR UNIT, PARTICULARLY FOR THE MARITIME SECTOR
SYSTÈME DE PALIER POUR UN MOTEUR OU GROUPE, NOTAMMENT DANS LE DOMAINE MARITIME

(30) Priorität: 07.11.2007 DE 102007052901
(43) Veröffentlichungstag der Anmeldung: 18.08.2010
(73) Patentinhaber: ContiTech Vibration Control GmbH, 30165 Hannover (DE); J. Meinert GmbH, 22459 Hamburg (DE)
(72) Erfinder: DORNER, Andreas, 21035 Hamburg (DE); ECKWERTH, Peter, 22885 Barsbüttel (DE); MEYER, Rüdiger, 21385 Amelinghausen (DE); MAUSSNER, Andreas, 22455 Hamburg (DE)
(74) Vertreter: Finger, Karsten
(86) Internationale Anmeldenummer: PCT/EP2008/062223
(87) Internationale Veröffentlichungsnummer: WO 2009/059828

(56) Entgegenhaltungen:
- EP-A- 1 191 248
- US-A- 2 760 747
- US-A- 5 846 106

## Beschreibung

Die Erfindung betrifft eine Lageranordnung für einen Motor oder ein Aggregat, insbesondere für den maritimen Bereich, umfassend wenigstens folgende Bauteile:
- zwei parallel verlaufende Buchsen mit horizontal verlaufender Achsrichtung, wobei jede Buchse einen Kern aus Metall oder Kunststoff, eine Außenhülse, die ebenfalls aus Metall oder Kunststoff besteht, sowie ein Polster aus elastomerem Werkstoff, das zwischen Kern und Außenhülse angeordnet ist, umfasst, wobei die Buchsen in einem Lagergehäuse untergebracht sind, wobei der Kopfbereich des Lagergehäuses mit einer Anbindung an den Motor bzw. das Aggregat versehen ist; sowie
- ein Traggestell, das beidseitig zu den beiden Buchsen angeordnet ist und dabei innerhalb des Buchsenstirnbereiches an dem jeweiligen Kern einer Buchse unter Ausbildung einer elastischen Aufhängung verankert ist, wobei das Traggestell eine Anbindung an das Fundament umfasst.

Eine Lageranordnung der oben genannten Art ist aus der Patentschrift US 5 846 106 bekannt. Dabei sind die beiden Buchsen innerhalb eines einzigen Gehäuses untergebracht.

Eine weitere Lageranordnung ist ferner in der Offenlegungsschrift DE 10 2005 027 620 A1 offenbart. Das Lager umfasst dabei einen Lageroberteil, einen Lagerunterteil sowie ein Polster aus elastomerem Werkstoff, das zwischen dem Lageroberteil und dem Lagerunterteil angeordnet ist. Der Lageroberteil ist glockenförmig ausgebildet und weist dabei in Lagerlängsrichtung, die zugleich die Motorlängsrichtung ist, eine größere Erstreckungsdimension auf als in Lagerquerrichtung. Eine derartige Lageranordnung ist insbesondere für Großmotoren konzipiert, die in Motorlängsrichtung Schubkräften ausgesetzt sind. Im maritimen Bereich sind derartige Großmotoren über einen Antrieb mit der Schiffsschraube verbunden, was dazu führt, dass in Motorlängsrichtung Schubkräfte (Propellerschubkräfte) wirken.

Als weitere Druckschriften zum Stand der Technik der Lageranordnungen sind insbesondere zu nennen:
DE 1 114 062 B
DE 1 206 214 B
EP 0 839 292 A1
EP 1 191 248 A2
WO 2005/036015 A1
FR 1 449 356 B
GB 2 086 530 A
NL 1 013 421 C
US 2 215 743
US 2 642 252
US 2 760 747
US 5 265 552

Hinsichtlich konstruktiver Details wird auf den Inhalt dieser Druckschriften verwiesen.

Im Rahmen einer Weiterentwicklung besteht die Aufgabe der Erfindung darin, eine Lageranordnung bereit zu stellen, die geeignet ist, Druck- und Zugkräfte sowie auch Kräfte in Fahrtrichtung elastisch aufzunehmen und die zudem zu einer möglichst geringen Bauhöhe beiträgt.

Gelöst wird diese Aufgabe gemäß Kennzeichen des Anspruches 1 dadurch, dass
- die beiden Buchsen jeweils in einem separaten Lagergehäuse untergebracht sind und
- die Anbindung an den Motor bzw. das Aggregat mit einer Nivelliervorrichtung versehen ist, wobei die Nivelliervorrichtung eine Stützhülse und eine drehbare Schiebehülse umfasst.

Zweckmäßige Ausgestaltungen der Lageranordnung sind in den Ansprüchen 2 bis 15 genannt.

Die Erfindung wird nun anhand von Ausführungsbeispielen unter Bezugnahme auf schematische Zeichnungen erläutert. Es zeigen:
- Fig. 1: eine Draufsicht auf eine Lageranordnung;
- Fig. 2: eine dreidimensionale Darstellung einer Lageranordnung;
- Fig. 3: das Zusammenwirken von Traggestell und Lagergehäuse;
- Fig. 4: Details der Buchsenkonstruktion (linke Figurenhälfte) gemäß Schnittlinie A-A (Fig. 1) sowie die Seitenansicht (rechte Figurenhälfte) einer Lageranordnung.

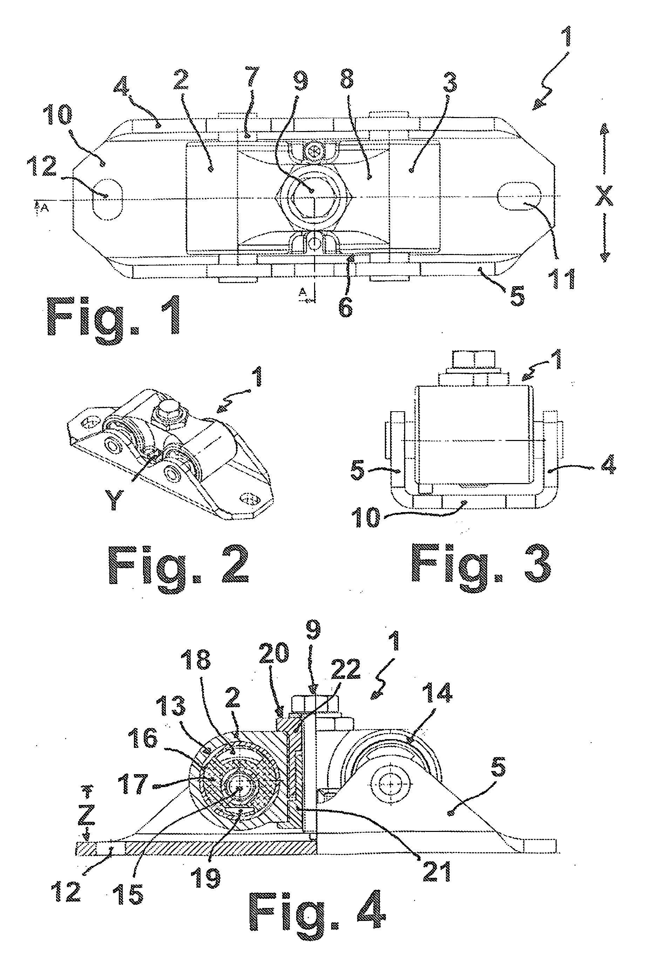

Fig. 1 zeigt eine Lageranordnung 1 mit zwei parallel verlaufenden Buchsen mit horizontal verlaufender Achsrichtung X. Auf die konstruktiven Details dieser Buchsen wird im Rahmen der Beschreibung der Fig. 4 noch näher eingegangen.

Jede Buchse ist in einem separaten Lagergehäuse 2 bzw. 3 untergebracht, wobei die beiden Lagergehäuse in einem Abstand Y zueinander angeordnet sind. Dies wird insbesondere in der Fig. 2 veranschaulicht. Auf diese Weise wird eine optimale Lagerwirkung erzielt.

Beidseitig zu den beiden Buchsen ist ein Traggestell 4 bzw. 5 angeordnet. Das Traggestell ist dabei innerhalb des Buchsenstirnbereiches 6 an dem jeweiligen Kern einer Buchse unter Ausbildung einer elastischen Aufhängung 7 verankert.

Die beiden Lagergehäuse 2 bzw. 3 sind mit einer gemeinsamen, verbindenden Kopfplatte 8 versehen. Dieser Kopfbereich umfasst eine Anbindung 9 an den Motor bzw. das Aggregat. Diese Anbindung, die in Verbindung mit der Beschreibung der Fig. 4 noch näher vorgestellt wird, ist mittig zwischen den beiden Buchsen bzw. den beiden Lagergehäusen 2 und 3 positioniert.

Die Lageranordnung 1 weist einen plattenförmigen Unterbau 10 auf, der mit dem Traggestell 4 bzw. 5 eine bauliche Einheit bildet, und zwar im Rahmen eines einstückigen Gesamtverbundes. Unterbau und Traggestell weisen in ihrer Gesamtheit eine U-förmige Querschnittsgestalt auf (Fig. 3). Der Unterbau ist mit einer Anbindung 11 und 12 an das Fundament versehen.

Fig. 4 zeigt nun die gleiche Lageranordnung 1 mit den beiden Buchsen 13 und 14, wobei die Schnittlinie A-A (Fig. 1) einen Detailblick auf die Buchse 13 sowie auf die Anbindung 9 erlaubt.

Die Buchse 13 umfasst einen Kern 15, eine Außenhülse 16 sowie ein Polster 17 aus elastomerem Werkstoff, das zwischen dem Kern und der Außenhülse angeordnet ist. Kern und Außenhülse bestehen zumeist aus Metall. Aber auch ein Kunststoff mit metallähnlichen Eigenschaften (z.B. auf Basis von Polyphenylenether) wäre geeignet.

Das Polster ist mit Aussparungen 18 und 19 als Luftpolster ausgestattet, was die Elastizität der Buchse optimiert. Vorzugsweise ist oberhalb und unterhalb des Kerns 15 jeweils eine Aussparung vorhanden, wobei die Aussparung 18 oberhalb des Kerns eine größere Querschnittsfläche aufweist als die Aussparung 19 unterhalb des Kerns. Eine Aussparung kann dabei zwischen den beiden Buchsenstirnbereichen als durchgehender Kanal ausgebildet sein. Auch die Ausbildung von Nieren ist möglich. Das Polster aus elastomerem Werkstoff bildet mit dem Kern und der Hülse einen Haftverbund, insbesondere durch Vulkanisation.

Die beiden Buchsen 13 und 14 sind bei einer Höhe Z höhengleich angeordnet.

Die Anbindung 19 zum Motor bzw. Aggregat weist eine integrierte Nivelliervorrichtung 20 zwecks Höhenverstellbarkeit auf. Die Nivelliervorrichtung umfasst dabei eine Stützhülse 21 und eine drehbare Schiebehülse 22. Hinsichtlich konstruktiver Möglichkeiten einer Nivelliervorrichtung wird auf den eingangs zitierten Stand der Technik, insbesondere auf die Offenlegungsschrift DE 10 2005 027 620 A1, verwiesen.

Die beiden Buchsen 13 und 14 können zwecks schneller Montage des Motors bzw. Aggregates vorgesetzt sein.

Das Doppelbuchsenlager gemäß Fig. 1 bis 4 ist bedingt durch diese Bauart abreißgesichert. Darüber hinaus weist es eine relativ geringe Bauhöhe auf. Von besonderer Bedeutung ist dabei, dass ein derartiges Doppelbuchsenlager besonders geeignet ist, sowohl Druck- und Zugkräfte als auch Kräfte in Fahrtrichtung elastisch aufzunehmen. Diese Bauform bringt somit dynamische Vorteile.

### Bezugszeichenliste

### (Teil der Beschreibung)

- 1: Lageranordnung
- 2: Lagergehäuse
- 3: Lagergehäuse
- 4: Traggestell
- 5: Traggestell
- 6: Buchsenstirnbereich
- 7: elastische Aufhängung
- 8: Kopfplatte (Buchsenträger)
- 9: Anbindung an den Motor bzw. das Aggregat
- 10: Unterbau
- 11: Anbindung an das Fundament
- 12: Anbindung an das Fundament
- 13: Buchse
- 14: Buchse
- 15: Kern
- 16: Außenhülse
- 17: Polster aus elastomerem Werkstoff
- 18: Aussparung
- 19: Aussparung
- 20: Nivelliervorrichtung
- 21: Stützhülse
- 22: drehbare Verschiebehülse
- X: Achsrichtung der Buchse
- Y: Abstand zwischen zwei Lagergehäusen
- Z: Höhe unter dem Aspekt der Höhengleichheit der Doppelbuchsen (Bezugspunkt Kernmitte)

## Patentansprüche

1. Lageranordnung (1) für einen Motor oder ein Aggregat, umfassend wenigstens folgende Bauteile:
- zwei parallel verlaufende Buchsen (13, 14) mit horizontal verlaufender Achsrichtung (X), wobei jede Buchse einen Kern (15) aus Metall oder Kunststoff, eine Außenhülse (16), die ebenfalls aus Metall oder Kunststoff besteht, sowie ein Polster (17) aus elastomerem Werkstoff, das zwischen Kern und Außenhülse angeordnet ist, umfasst, wobei die Buchsen in einem Lagergehäuse (2, 3) untergebracht sind, wobei der Kopfbereich des Lagergehäuses mit einer Anbindung (9) an den Motor bzw. das Aggregat versehen ist; sowie
- ein Traggestell (4, 5), das beidseitig zu den beiden Buchsen (13, 14) angeordnet ist und dabei innerhalb des Buchsenstirnbereiches (6) an dem jeweiligen Kern (15) einer Buchse unter Ausbildung einer elatischen Aufhängung (7) verankert ist, wobei das Traggestell eine Anbindung (11, 12) an das Fundament umfasst;
**dadurch gekennzeichnet, dass**
- die beiden Buchsen (13, 14) jeweils in einem separaten Lagergehäuse (2, 3) untergebracht sind und
- die Anbindung (9) an den Motor bzw. das Aggregat mit einer Nivelliervorrichtung (20) versehen ist, wobei die Nivelliervorrichtung (20) eine Stützhülse (21) und eine drehbare Schiebehülse (22) umfasst.

2. Lageranordnung nach Anspruch 1, **dadurch gekennzeichnet, dass** das Polster (17) einer Buchse (13, 14) mit wenigstens einer Aussparung (18, 19) als Luftpolster versehen ist.

3. Lageranordnung nach Anspruch 2, **dadurch gekennzeichnet, dass** oberhalb und unterhalb des Kerns (15) jeweils eine Aussparung (18, 19) vorhanden ist.

4. Lageranordnung nach Anspruch 3, **dadurch gekennzeichnet, dass** die Aussparung (18) oberhalb des Kerns (15) eine größere Querschnittsfläche aufweist als die Aussparung (19) unterhalb des Kerns (15).

5. Lageranordnung nach einem der Ansprüche 2 bis 4, **dadurch gekennzeichnet, dass** die Aussparung/en (18, 19) zwischen den beiden Buchsenstirnbereichen (6) als durchgehender Kanal ausgebildet ist/sind.

6. Lageranordnung nach einem der Ansprüche 2 bis 4, **dadurch gekennzeichnet, dass** die Aussparung/en (18, 19) als Niere ausgebildet ist/sind.

7. Lageranordnung nach einem der Ansprüche 1 bis 6, **dadurch gekennzeichnet, dass** die beiden Buchsen (13, 14) höhengleich angeordnet sind.

8. Lageranordnung nach einem der Ansprüche 1 bis 7, **dadurch gekennzeichnet, dass** die beiden Lagergehäuse (2, 3) in einem Abstand (Y) zueinander angeordnet sind.

9. Lageranordnung nach einem der Ansprüche 1 bis 8, **dadurch gekennzeichnet, dass** die beiden Lagergehäuse (2, 3) mit einer gemeinsamen Kopfplatte (8) versehen sind.

10. Lageranordnung nach einem der Ansprüche 1 bis 9, **dadurch gekennzeichnet, dass** diese einen plattenförmigen Unterbau (10) aufweist, der mit dem Traggestell (4, 5) eine bauliche Einheit bildet.

11. Lageranordnung nach Anspruch 10, **dadurch gekennzeichnet, dass** der Unterbau (10) und das Traggestell (4, 5) einen einstückigen Gesamtverbund bilden.

12. Lageranordnung nach Anspruch 10 oder 11, **dadurch gekennzeichnet, dass** der Unterbau (10) und das Traggestell (4, 5) in ihrer Gesamtheit eine U-förmige Querschnittsgestalt aufweisen.

13. Lageranordnung nach einem der Ansprüche 10 bis 12, **dadurch gekennzeichnet, dass** der Unterbau (10) mit einer Anbindung (11, 12) für das Fundament versehen ist.

14. Lageranordnung nach einem der Ansprüche 1 bis 13, **dadurch gekennzeichnet, dass** die Anbindung (9) an den Motor bzw. das Aggregat mittig zwischen den beiden Buchsen (13, 14) positioniert ist,

15. Lageranordnung nach einem der Ansprüche 1 bis 14, **dadurch gekennzeichnet, dass** die Buchsen (12, 13) zwecks schneller Montage des Motors bzw. Aggregates vorgesetzt sind.

## Claims

1. Bearing arrangement (1) for a motor or a unit, comprising at least the following components:
- two parallel-extending bushings (13, 14) having a horizontally extending axis direction (X), each bushing comprising a core (15) of metal or plastic, an outer sleeve (16), which is likewise made of metal or plastic, and a cushion (17) of elastomeric material which is arranged between the core and outer sleeve, the bushings being accommodated in a bearing housing (2, 3), and the head region of the bearing housing being provided with an attachment (9) to the motor or the unit; and
- a carrier frame (4, 5) which is arranged on both sides of the two bushings (13, 14) and is thereby anchored, inside the bushing end region (6), to the respective core (15) of a bushing so as to form an elastic suspension (7), the carrier frame comprising an attachment (11, 12) to the base;
**characterized in that**
- the two bushings (13, 14) are each accommodated in a separate bearing housing (2, 3), and
- the attachment (9) to the motor or the unit is provided with a levelling device (20), the levelling device (20) comprising a support sleeve (21) and a rotatable sliding sleeve (22).

2. Bearing arrangement according to Claim 1, **characterized in that** the cushion (17) of a bushing (13, 14) is provided with at least one cutout (18, 19) as an air cushion.

3. Bearing arrangement according to Claim 2, **characterized in that** one cutout (18, 19) is provided above and one below the core (15).

4. Bearing arrangement according to Claim 3, **characterized in that** the cutout (18) above the core (15) has a larger cross-sectional area than the cutout (19) below the core (15).

5. Bearing arrangement according to one of Claims 2 to 4, **characterized in that** the cutout or cutouts (18, 19) is or are formed between the two bush end regions (6) as a through-passage.

6. Bearing arrangement according to one of Claims 2 to 4, **characterized in that** the cutout or cutouts (18, 19) is or are kidney-shaped.

7. Bearing arrangement according to one of Claims 1 to 6, **characterized in that** the two bushings (13, 14) are arranged at equal height.

8. Bearing arrangement according to one of Claims 1 to 7, **characterized in that** the two bearing housings (2, 3) are arranged at a distance (Y) from one another.

9. Bearing arrangement according to one of Claims 1 to 8, **characterized in that** the two bearing housings (2, 3) are provided with a common head plate (8).

10. Bearing arrangement according to one of Claims 1 to 9, **characterized in that** it has a plate-like substructure (10) which forms a structural unit with the carrier frame (4, 5).

11. Bearing arrangement according to Claim 10, **characterized in that** the substructure (10) and the carrier frame (4, 5) form an integral overall assembly.

12. Bearing arrangement according to Claim 10 or 11, **characterized in that** the substructure (10) and the carrier frame (4, 5) have overall a U-shaped cross-sectional configuration.

13. Bearing arrangement according to one of Claims 10 to 12, **characterized in that** the substructure (10) is provided with an attachment (11, 12) for the base.

14. Bearing arrangement according to one of Claims 1 to 13, **characterized in that** the attachment (9) to the motor or the unit is positioned centrally between the two bushings (13, 14).

15. Bearing arrangement according to one of Claims 1 to 14, **characterized in that** the bushings (12, 13) are forwardly positioned to allow quick fitting of the motor or unit.

## Revendications

1. Système de palier (1) pour un moteur ou un groupe, comprenant au moins les composants suivantes :
- deux douilles s'étendant parallèlement (13, 14) avec une direction axiale horizontale (X), chaque douille comprenant un noyau (15) en métal ou en plastique, une douille extérieure (16) qui se compose également de métal ou de plastique, ainsi qu'un coussin (17) en matériau élastomère, qui est disposé entre le noyau et la douille extérieure, les douilles étant montées dans un logement de palier (2, 3), la région de tête du logement de palier étant pourvue d'une liaison (9) au moteur ou au groupe ; et
- un bâti porteur (4, 5), qui est disposé des deux côtés des deux douilles (13, 14) et qui est en l'occurrence ancré à l'intérieur de la région frontale des douilles (6) sur le noyau respectif (15) d'une douille en formant une suspension élastique (7), le bâti porteur comprenant une liaison (11, 12) au socle ;
**caractérisé en ce que**
- les deux douilles (13, 14) sont à chaque fois montées dans un logement de palier séparé (2, 3) et
- la liaison (9) au moteur ou au groupe est pourvue d'un dispositif de mise à niveau (20), le dispositif de mise à niveau (20) comprenant un manchon de support (21) et un manchon coulissant rotatif (22).

2. Système de palier selon la revendication 1, **caractérisé en ce que** le coussin (17) d'une douille (13, 14) est pourvu d'au moins un évidement (18, 19) en tant que coussin pneumatique.

3. Système de palier selon la revendication 2, **caractérisé en ce qu'**un évidement (18, 19) est à chaque fois prévu au-dessus et sous le noyau (15).

4. Système de palier selon la revendication 3, **caractérisé en ce que** l'évidement (18) au-dessus du noyau (15) présente une plus grande surface en section transversale que l'évidement (19) sous le noyau (15).

5. Système de palier selon l'une quelconque des revendications 2 à 4, **caractérisé en ce que** le ou les évidements (18, 19) entre les deux régions frontales des douilles (6) sont réalisés sous forme de canal continu.

6. Système de palier selon l'une quelconque des revendications 2 à 4, **caractérisé en ce que** le ou les évidements (18, 19) sont réalisés sous forme de haricots.

7. Système de palier selon l'une quelconque des revendications 1 à 6, **caractérisé en ce que** les deux douilles (13, 14) sont disposées à la même hauteur.

8. Système de palier selon l'une quelconque des revendications 1 à 7, **caractérisé en ce que** les deux logements de palier (2, 3) sont disposés à une distance (Y) l'un de l'autre.

9. Système de palier selon l'une quelconque des revendications 1 à 8, **caractérisé en ce que** les deux logements de palier (2, 3) sont pourvus d'une plaque de tête commune (8).

10. Système de palier selon l'une quelconque des revendications 1 à 9, **caractérisé en ce que** celui-ci présente un châssis (10) en forme de plaque, qui forme avec le bâti porteur (4, 5) une unité constructive.

11. Système de palier selon la revendication 10, **caractérisé en ce que** le châssis (10) et le bâti porteur (4, 5) forment un assemblage complet d'une seule pièce.

12. Système de palier selon la revendication 10 ou 11, **caractérisé en ce que** le châssis (10) et le bâti porteur (4, 5) présentent dans leur totalité une configuration de section transversale en forme de U.

13. Système de palier selon l'une quelconque des revendications 10 à 12, **caractérisé en ce que** le châssis (10) est pourvu d'une liaison (11, 12) pour le socle.

14. Système de palier selon l'une quelconque des revendications 1 à 13, **caractérisé en ce que** la liaison (9) au moteur ou au groupe est positionnée centralement entre les deux douilles (13, 14).

15. Système de palier selon l'une quelconque des revendications 1 à 14, **caractérisé en ce que** les douilles (12, 13) sont saillantes en vue d'un montage rapide du moteur ou du groupe.
